(19) Europäisches Patentamt / European Patent Office / Office européen des brevets

(11) **EP 3 657 313 B1**

(12) **FASCICULE DE BREVET EUROPEEN**

(45) Date de publication et mention
de la délivrance du brevet:
**09.02.2022 Bulletin 2022/06**

(21) Numéro de dépôt: **19207960.6**

(22) Date de dépôt: **08.11.2019**

(51) Classification Internationale des Brevets (IPC):
**G06F 3/0481** *(2022.01)* **G06F 3/0486** *(2013.01)*
**H04W 4/02** *(2018.01)* **H04W 4/80** *(2018.01)*
**G06F 3/0488** *(2022.01)*

(52) Classification Coopérative des Brevets (CPC):
**G06F 3/0486; G06F 3/0481; G06F 3/04883;**
**H04W 4/023;** H04W 4/80

(54) **PROCÉDÉ DE COMMUNICATION ENTRE UN ÉQUIPEMENT PORTABLE COMPORTANT UNE SURFACE TACTILE, ET UN ÉQUIPEMENT PÉRIPHÉRIQUE SÉLECTIONNÉ PAR UN GLISSEMENT DIRECTIF SUR LA SURFACE TACTILE**

KOMMUNIKATIONSVERFAHREN ZWISCHEN EINER TRAGBAREN AUSRÜSTUNG MIT EINER BERÜHRUNGSEMPFINDLICHEN OBERFLÄCHE UND PERIPHERE AUSRÜSTUNG, DIE DURCH EINE RICHTUNGGEBENDE VERSCHIEBUNG AUF DER BERÜHRUNGSEMPFINDLICHEN OBERFLÄCHE AUSGEWÄHLT WIRD

COMMUNICATION METHOD BETWEEN A PORTABLE DEVICE COMPRISING A TOUCH-SENSITIVE SURFACE, AND A PERIPHERAL DEVICE SELECTED BY DIRECTIVE SLIDING ON THE TOUCH-SENSITIVE SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2018 FR 1871612**

(43) Date de publication de la demande:
**27.05.2020 Bulletin 2020/22**

(73) Titulaire: **SAGEMCOM BROADBAND SAS**
**92500 Rueil-Malmaison (FR)**

(72) Inventeur: **BENAMROUCHE, Farid**
**92500 Rueil-Malmaison (FR)**

(74) Mandataire: **Lavaud, Thomas et al**
**Cabinet Boettcher**
**16, rue Médéric**
**75017 Paris (FR)**

(56) Documents cités:
**US-A1- 2012 127 012 US-A1- 2013 169 546**
**US-A1- 2015 326 704 US-A1- 2017 090 711**

## Description

L'invention concerne le domaine des procédés de communication entre un équipement portable comportant une surface tactile, et un équipement périphérique sélectionné par un glissement directif sur la surface tactile.

## ARRIERE PLAN DE L'INVENTION

Certains boîtiers décodeurs développés récemment sont capables de communiquer avec des équipements autres qu'une télévision, pour mettre en œuvre de nouvelles fonctions et pour faciliter leur utilisation.

Ces équipements sont par exemple des équipements portables : tablette, *smartphone*, ordinateur portable, montre connectée, etc.

Parmi ces nouvelles fonctions, on a désormais la possibilité de regarder un contenu vidéo sur un *smartphone* ou sur une tablette, et de transférer au boîtier décodeur le contenu vidéo pour continuer à regarder le contenu vidéo sur la télévision qui est connectée au boîtier décodeur.

Ce type de transfert n'est bien sûr pas uniquement un transfert de contenu vidéo vers un boîtier décodeur : tout type de contenu multimédia peut être transféré depuis un équipement portable vers tout type d'équipement périphérique. Comme on l'a vu, le contenu multimédia peut être une vidéo transférée vers un boîtier décodeur, mais peut aussi être une vidéo transférée vers un *dongle* connecté directement sur une télévision, ou encore un contenu audio transféré vers un haut-parleur connecté, etc.

Généralement, les interfaces proposées pour réaliser ce type de transfert sont peu conviviales et sont complexes à utiliser, surtout pour certaines personnes, comme les personnes âgées, qui n'ont pas l'habitude d'utiliser de tels équipements. En particulier, la sélection de l'équipement périphérique vers lequel on souhaite transférer un contenu multimédia est peu pratique et peu instinctive à réaliser.

Les documents US 2013/169546 A1 et US 2017/090711 A1 décrivent des interfaces permettant de sélectionner un équipement périphérique à partir d'un équipement portable.

## OBJET DE L'INVENTION

L'invention a pour objet de sélectionner de manière simple, conviviale et instinctive un équipement périphérique avec lequel on souhaite qu'un équipement portable établisse une communication.

## RESUME DE L'INVENTION

En vue de la réalisation de ce but, on propose un procédé de communication selon la revendication indépendante 1.

On propose aussi un équipement portable selon la revendication indépendante 10.

On propose de plus un programme d'ordinateur selon la revendication indépendante 13.

On propose en outre des moyens de stockage selon la revendication indépendante 14.

L'invention sera mieux comprise à la lumière de la description qui suit d'un mode de mise en œuvre particulier non limitatif de l'invention.

## BREVE DESCRIPTION DES DESSINS

Il sera fait référence aux dessins annexés, parmi lesquels :

[Fig.1] la figure 1 représente une tablette, des équipements périphériques comprenant un boîtier décodeur relié à une télévision, et trois équipements de référence ;
[Fig.2] la figure 2 représente la tablette, le boîtier décodeur, la télévision et les trois équipements de référence, ainsi qu'une direction de référence et des directions de glissements effectués lors de la mise en œuvre du procédé de communication selon l'invention.

## DESCRIPTION DETAILLEE DE L'INVENTION

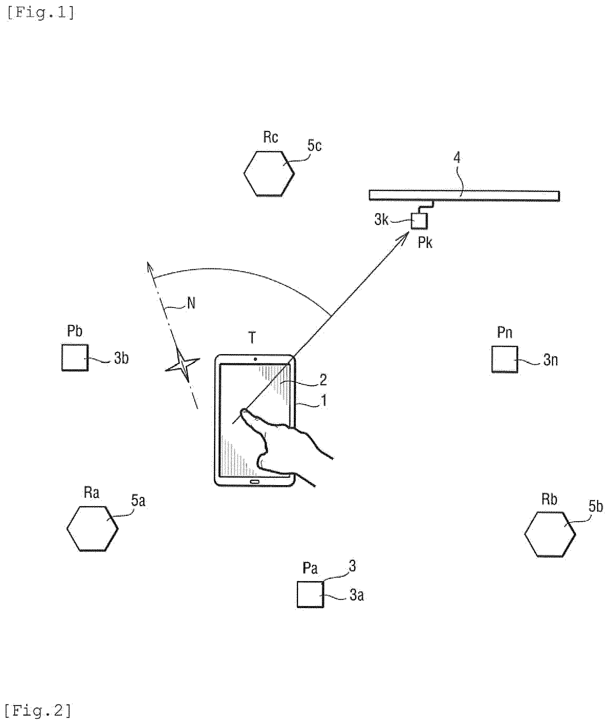

En référence à la figure 1, le procédé de communication selon l'invention est mis en œuvre dans un équipement portable 1 comportant une surface tactile. La surface tactile appartient ici à un écran tactile 2 de l'équipement portable 1.

L'équipement portable 1 est ici une tablette 1. La tablette 1 comprend des composants de communication lui permettant d'échanger des données selon la norme Bluetooth.

La tablette 1 comporte de plus un composant de traitement.

Le composant de traitement est ici un processeur, mais pourrait être un composant différent, par exemple un microcontrôleur, un FPGA, un ASIC, etc. Le processeur est adapté à exécuter des instructions d'un programme pour mettre en œuvre le procédé de communication selon l'invention.

La tablette 1 est ici portée par un individu qui se trouve dans son habitation.

L'habitation de l'individu comporte au moins un, en l'occurrence une pluralité d'équipements périphériques 3a, ..., 3n ayant pour positions respectives Pa, ..., Pn. Parmi ces équipements périphériques 3, on trouve notamment un boîtier décodeur 3k qui est connecté à une télévision 4.

Dans l'habitation de l'individu, on trouve de plus un premier équipement de référence 5a, un deuxième équipement de référence 5b, et un troisième équipement de référence 5c. Le premier équipement de référence 5a est une enceinte connectée, le deuxième équipement de référence 5b est un amplificateur de *home cinéma,* et le troisième équipement de référence 5c est une passerelle résidentielle.

Les trois équipements de référence 5 comprennent tous des composants de communication leur permettant d'échanger des données selon la norme *Bluetooth.*

Le procédé de communication selon l'invention nécessite notamment de déterminer la position de certains équipements, et notamment de la tablette 1.

La position T de la tablette 1 est ici déterminée par triangulation Bluetooth, dans un référentiel défini par les positions d'au moins trois équipements de référence, en l'occurrence par la position Ra du premier équipement de référence 5a, par la position Rb du deuxième équipement de référence 5b, et par la position Rc du troisième équipement de référence 5c. Le premier équipement de référence 5a, le deuxième équipement de référence 5b et le troisième équipement de référence 5c jouent donc le rôle de balises *Bluetooth* permettant de géolocaliser la tablette 1.

La triangulation *Bluetooth* utilise ici des mesures de RSSI (pour *Received Signal Strength Indication*). Lorsqu'un équipement récepteur quelconque reçoit un signal *Bluetooth* émis par un équipement émetteur quelconque, le RSSI évalué par l'équipement récepteur est une mesure de la puissance en réception du signal qui est représentative de la distance entre l'équipement récepteur et l'équipement émetteur.

La triangulation ici mise en œuvre utilise le principe de l'angle d'arrivée (ou AoA, pour *Angle of Arrival*).

Le premier équipement de référence 5a et le deuxième équipement de référence 5b forment la base d'un triangle.

L'origine du référentiel est la position du premier équipement de référence 5a, dont les coordonnées dans le référentiel sont (0 ; 0).

Une mesure de RSSI est produite par le premier équipement de référence 5a ou par le deuxième équipement de référence 5b. Une valeur M(5a, 5b) est obtenue à partir de cette mesure de RSSI. La valeur M(5a, 5b) est une valeur de puissance représentative de la distance entre le premier équipement de référence 5a et le deuxième équipement de référence 5b. Cette valeur de puissance représente l'unité utilisée dans le référentiel. Les « mesures de distance » produites ici sont donc en réalité des mesures de puissances relatives exprimées en fonction de la valeur M(5a, 5b).

On considère que la tablette 1 se trouve dans la position T qui forme le troisième sommet du triangle Ra, Rb, T.

Une valeur M(5a, 1) et une valeur M(5b, 1) sont obtenues. Ces valeurs sont des valeurs de puissance qui sont respectivement représentatives de la distance entre le premier équipement de référence 5a et la tablette 1, et de la distance entre le deuxième équipement de référence 5b et la tablette 1.

On utilise alors les valeurs M(5a, 5b), M(5a, 1) et M(5b, 1), ainsi que les relations trigonométriques classiques, pour calculer les angles RaRbT et RbRaT.

On obtient ainsi la position T de la tablette 1, sans qu'il soit nécessaire de connaître la distance dans un référentiel métrique entre le premier équipement de référence 5a et le deuxième équipement de référence 5b.

Pour améliorer la précision de la position T de la tablette 1, on répète ces mesures avec le troisième équipement de référence Rc pour réaliser une triangulation.

On note que cette méthode peut bien sûr être utilisée pour évaluer la position d'autres équipements.

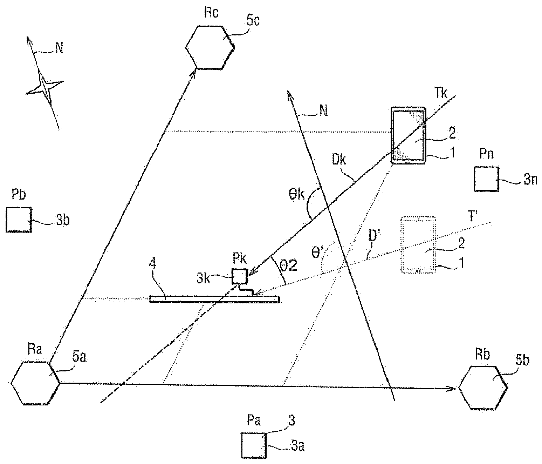

On décrit maintenant de manière plus précise, en référence à la figure 2, la mise en œuvre du procédé de communication selon l'invention.

Le procédé de communication débute par une phase de calibration préliminaire.

Au cours de cette phase de calibration préliminaire, la tablette 1 détecte tous les équipements périphériques 3 présents sur le réseau (comprenant le boîtier décodeur 3k). Cette détection utilise tout type de protocole de détection, par exemple le protocole UPnP (pour *Universal Plug and Play*), le protocole *AirPlay,* etc. La tablette 1 range les identifiants de ces équipements périphériques 3 dans une liste d'équipements périphériques 3.

Puis, la tablette 1 acquiert les positions Pa, ..., Pn de chaque équipement périphérique 3a, ..., 3n.

Si un équipement périphérique 3 est capable d'échanger des données en *Bluetooth*, l'équipement périphérique 3 détermine lui-même sa position P par triangulation dans le référentiel évoqué plus tôt, et la transmet à la tablette 1.

Si l'équipement périphérique 3 en question ne peut pas échanger de données en *Bluetooth,* ou bien si l'équipement périphérique 3 ne peut pas se géolocaliser dans le référentiel pour toute autre raison, la tablette 1 demande à l'individu de positionner la tablette 1 à proximité immédiate de l'équipement périphérique 3, par exemple sur l'équipement périphérique 3. La tablette 1 demande alors à l'individu de réaliser une action, comme par exemple appuyer sur un bouton ou sur une surface de l'écran tactile 2 de la tablette 1, pour valider la position dans laquelle la tablette 1 se trouve. La tablette 1 acquiert alors sa propre position et considère que sa propre position correspond à la position de l'équipement périphérique 3.

Alternativement, la position d'un ou de plusieurs équipements périphériques 3 pourrait être déterminée en utilisant une caméra positionnée pour voir les équipements périphériques 3 et pour acquérir des images de ces équipements périphériques 3 permettant de les localiser.

Ensuite, pour chaque équipement périphérique 3, la tablette 1 demande à l'individu de se positionner (et donc de positionner la tablette 1) dans une position de calibration quelconque, par exemple au milieu de la pièce dans laquelle se trouvent les équipements périphériques 3, et d'effectuer un glissement de calibration avec un doigt ou avec un objet quelconque (par exemple un stylet) sur l'écran tactile 2 de la tablette 1, de sorte qu'une direction du glissement de calibration vise ledit équipement périphérique 3.

La tablette 1 acquiert, sauvegarde et associe au périphérique 3 la position de calibration, ainsi qu'un angle de glissement de calibration entre la direction de référence N et la direction du glissement de calibration. La direction de référence N est le nord magnétique.

Par exemple, pour le boîtier décodeur 3k, la position de calibration de la tablette 1 sur la figure 2 est la position Tk, l'angle de glissement de calibration est l'angle θk, et la direction du glissement de calibration est la direction Dk.

Suite à cette phase de calibration, l'individu peut utiliser sa tablette 1 pour sélectionner, par glissement sur l'écran tactile 2, un équipement périphérique sélectionné parmi les autres équipements périphériques 3, vers lequel il souhaite transférer un contenu multimédia, ou bien, plus généralement, avec lequel il souhaite que la tablette 1 établisse une communication.

L'équipement périphérique sélectionné est ici le boîtier décodeur 3k relié à la télévision 4. L'individu portant la tablette 1 souhaite en effet transférer un contenu vidéo vers le boîtier décodeur 3k pour diffuser le contenu vidéo sur la télévision 4. On note que le contenu vidéo peut être stocké dans la tablette 1 sous forme d'un fichier vidéo, mais peut aussi être en cours de réception par la tablette 1 via un flux vidéo provenant par exemple du réseau internet.

Le procédé de communication comporte ensuite l'étape de déterminer une position présente et une orientation présente de la tablette 1.

Par position et orientation « présente », on entend la position et l'orientation de la tablette 1 au moment où l'individu décide de lancer le transfert vers le boîtier décodeur 3k.

L'orientation présente de la tablette 1 est produite grâce à une boussole présente dans la tablette 1, qui donne une orientation par rapport à la direction de référence N. L'orientation présente de la tablette 1 est donc relative à la direction de référence N.

La position présente de la tablette 1 correspond à la position T'sur la figure 2.

L'individu effectue alors un glissement de sélection sur l'écran tactile 2 de la tablette 1, en direction de l'équipement sélectionné, c'est-à-dire du boîtier décodeur 3k (ou de la télévision 4). L'individu réalise le glissement de sélection avec l'un de ses doigts ou bien avec un objet quelconque, par exemple avec un stylet.

La tablette 1 acquiert la direction du glissement de sélection D', ainsi que l'angle de glissement de sélection θ' entre la direction de référence N et la direction du glissement de sélection D'. La direction du glissement de sélection D'est relative à la direction de référence N.

La tablette 1 définit alors, parmi les équipements périphériques P de l'habitation de l'individu, l'équipement périphérique sélectionné, c'est-à-dire en l'occurrence le boîtier décodeur 3k, dont la position correspond à la direction du glissement de sélection D'.

L'équipement périphérique sélectionné est défini de la manière suivante.

La tablette 1 a déjà détecté tous les équipements périphériques 3 et a rangé leurs identifiants dans une liste d'équipements périphériques 3. La tablette 1 tente de vérifier, pour chaque équipement périphérique 3 l'un après l'autre, si ledit équipement périphérique 3 est l'équipement périphérique sélectionné.

Pour chaque équipement périphérique 3, et donc en l'occurrence ici pour le boîtier décodeur 3k, la tablette 1 détermine que la position dudit équipement périphérique (c'est à dire du boîtier décodeur 3k) correspond à la direction du glissement de sélection D', et donc que ledit boîtier décodeur 3k est l'équipement périphérique sélectionné, lorsque $|θ2-θ2'| < ε$, où $ε$ est un seuil angulaire prédéterminé (ou une erreur), et où :

$$θ2=\arccos(((TkPk)^2+(T'Pk)^2-(TkT')^2)/(2*(TkPk)*(T'Pk))),$$

et où :

- $θ2'= θk-θ'$ ;
- Tk est la position de calibration associée au boîtier décodeur 3k ;
- Pk est la position du boîtier décodeur 3k ;

- TkPk est le segment entre Tk et Pk ;
- T' est la position présente de la tablette 1 ;
- T'Pk est le segment entre T' et Pk ;
- TkT' est le segment entre Tk et T';
- $\theta k$ est un l'angle de glissement de calibration associé au boîtier décodeur 3k ;
- $\theta'$ est l'angle de glissement de sélection entre la direction de référence N et la direction du glissement de sélection D'.

Si $|\theta2-\theta2'| < \epsilon$, c'est-à-dire si l'angle de glissement de sélection $\theta'$ correspond bien au boîtier décodeur 3k, qui est alors l'équipement périphérique 3 sélectionné, une communication démarre entre la tablette 1 et le boîtier décodeur 3k : la tablette 1 commence à transférer le contenu vidéo vers le boîtier décodeur 3k.

Si l'angle de glissement de sélection $\theta'$ ne correspond pas au boîtier décodeur 3k, les calculs qui viennent d'être décrits sont répétés pour l'équipement périphérique suivant dans la liste d'équipements périphériques.

Le calcul de $\theta2$ est alors réitéré. La valeur de $\theta'$, elle, bien sûr, n'est pas modifiée, car le glissement de sélection est bien valide (même s'il ne correspond pas à l'équipement périphérique en question). De même, la valeur de T'n'est pas modifiée, car la tablette 1 ne bouge pas.

On note que le seuil angulaire prédéterminé $\epsilon$ peut être réglable.

On estime le seuil angulaire prédéterminé $\epsilon$ en utilisant la configuration plausible la moins favorable.

En prenant une distance entre la tablette 1 et le boîtier décodeur 3k de 10m et une erreur maximum de 30cm sur la visée, on obtient une marge d'erreur pour l'angle d'environ 1,5°, c'est-à-dire un seuil angulaire prédéterminé $\epsilon$ égal à 1,5°.

On note qu'il est parfaitement possible de modifier la position de l'un des équipements de référence 5, sans effectuer à nouveau les étapes de calibration, s'il y a au moins quatre équipements de référence 5 dans le système de coordonnées définissant le référentiel utilisé. Cela implique toutefois qu'on ne bouge qu'un seul équipement de référence 5 à la fois et qu'on lui laisse le temps de démarrer.

Les coordonnées des équipements périphériques 3 sont recalculées via une translation RbRb' (si c'est l'équipement de référence 5b qui a bougé depuis la position Rb vers la position Rb').

Il est aussi parfaitement possible de modifier la position Pi de l'un des équipements périphériques 3i, à condition de n'en déplacer qu'un seul à la fois et de lui laisser le temps de se reconfigurer.

Si l'équipement périphérique 3i est agencé pour échanger des données en *Bluetooth*, sa position est redéfinie automatiquement. Si ce n'est pas le cas, il faut à nouveau amener la tablette 1 à proximité de l'équipement périphérique 3i pour déterminer sa nouvelle position.

Une fois la nouvelle position Pi' de l'équipement périphérique 3i connue, il suffit de calculer l'angle $\alpha$ entre les droites (TPi) et (TPi'). Ce calcul utilise les relations trigonométriques classiques, en sachant que toutes les distances du triangle TPiPi' sont connues.

Un nouvel angle de glissement de calibration $\theta i''$ est alors déduit :

$\theta i'' = \theta i - \alpha$, où $\theta i$ est l'angle de glissement de calibration associé à l'équipement périphérique 3i.

Bien entendu, l'invention n'est pas limitée au mode de réalisation décrit mais englobe toute variante entrant dans le champ de l'invention telle que définie par les revendications.

On a indiqué ici que l'équipement portable est une tablette, mais un autre équipement portable muni d'un écran tactile pourrait être utilisé, par exemple un *smartphone,* un ordinateur portable, une montre connectée, etc.

Les équipements de référence et les équipements périphériques pourraient être différents de ceux cités. On note d'ailleurs que les équipements de référence peuvent parfaitement comprendre un ou plusieurs équipements périphériques, et que les équipements périphériques peuvent parfaitement comprendre un ou plusieurs équipements de référence.

On a indiqué que la communication entre l'équipement portable et l'équipement périphérique sélectionné est un transfert de contenu multimédia. Cette communication pourrait être une communication différente, et pourrait par exemple consister en un simple échange de données, ou bien en un transfert de contenu multimédia non pas depuis l'équipement portable vers l'équipement périphérique sélectionné, mais depuis l'équipement périphérique sélectionné vers l'équipement portable, etc.

On a décrit ici que la surface tactile de l'équipement portable appartient à un écran tactile. La surface tactile pourrait aussi être une surface tactile différente, par exemple une surface tactile d'un pavé tactile.

On a indiqué que la triangulation mise en œuvre est une triangulation *Bluetooth.* Tout type de triangulation mettant en œuvre des cndes radioélectriques pourrait être utilisée, et notamment une triangulation *Wi-Fi.*

**Revendications**

**1.** Procédé de communication entre un équipement portable (1) comportant une surface tactile (2), et un équipement périphérique sélectionné (3k) parmi au moins un équipement périphérique (3), comprenant : une phase de calibration préliminaire comprenant les étapes, pour chaque équipement périphérique (3k), de :

- détecter ledit équipement périphérique (3k) ;
- acquérir une position (Pk) dudit équipement périphérique ;
- faire positionner l'équipement portable (1) dans une position de calibration (Tk) ;
- faire effectuer un glissement de calibration avec le doigt ou avec l'objet quelconque, sur la surface tactile (2) de l'équipement portable (1), de sorte qu'une direction du glissement de calibration (Dk) vise ledit équipement périphérique ;
- acquérir et sauvegarder un angle de glissement de calibration (θk) entre la direction de référence (N) et la direction du glissement de calibration, ainsi que la position de calibration, le procédé de communication comprenant en outre les étapes de :
- déterminer une position présente (T') de l'équipement portable, et une orientation présente de l'équipement portable relative à une direction de référence (N) ;
- déterminer une direction d'un glissement de sélection (D') sur la surface tactile de l'équipement portable, effectué par un doigt d'un individu ou par un objet quelconque, la direction du glissement de sélection étant relative à la direction de référence (N) ;
- définir, parmi le au moins un équipement périphérique (3), en utilisant les angles de glissement de calibration, les positions de calibration, la position présente (T'), ainsi que la direction du glissement de sélection (D'), l'équipement périphérique sélectionné (3k) dont la position (Pk) correspond à la direction du glissement de sélection ;
- démarrer une communication entre l'équipement portable (1) et l'équipement périphérique sélectionné (3k).

2.  Procédé de communication selon la revendication 1, dans lequel la position présente (T') de l'équipement portable (1) est déterminée par triangulation dans un référentiel défini par au moins trois équipements de référence (5).

3.  Procédé de communication selon la revendication 2, dans lequel la triangulation est une triangulation *Bluetooth* ou *Wi-Fi.*

4.  Procédé de communication selon la revendication 1, comprenant l'étape de déterminer que la position d'un équipement périphérique (3k) correspond à la direction du glissement de sélection, et donc que ledit équipement périphérique est l'équipement périphérique sélectionné (3k), lorsque $|θ2-θ2'| < ε$, où $ε$ est un seuil angulaire prédéterminé, où :

$$θ2=\arccos(((TkPk)^2+(T'Pk)^2-(TkT')^2)/(2*(TkPk)*(T'Pk))),$$

et où :

- $θ2' = θk-θ'$ ;
- Tk est la position de calibration associée audit équipement périphérique (3k) ;
- Pk est la position dudit équipement périphérique (3k);
- TkPk est le segment entre Tk et Pk ;
- T' est la position présente de l'équipement portable (1) ;
- T'Pk est le segment entre T' et Pk ;
- TkT' est le segment entre Tk et T' ;
- θk est l'angle de glissement de calibration associé audit équipement périphérique (3k);
- θ' est l'angle de glissement de sélection entre la direction de référence (N) et la direction du glissement de sélection (D').

5.  Procédé de communication selon la revendication 1, dans lequel la position d'au moins un équipement périphérique est déterminée en positionnant l'équipement portable à proximité immédiate dudit équipement périphérique, et en considérant que cette position de l'équipement portable correspond à la position dudit équipement périphérique.

6.  Procédé de communication selon la revendication 1, dans lequel la position d'au moins un équipement périphérique (3) est déterminée en utilisant une caméra agencée pour acquérir une image de l'équipement périphérique.

7.  Procédé de communication selon la revendication 2, dans lequel la position d'au moins un équipement périphérique (3) est déterminée par triangulation dans le référentiel.

8. Procédé de communication selon la revendication 2, dans lequel les équipements de référence (5) comprennent au moins un équipement périphérique (3), ou bien les équipements périphériques (3) comprennent au moins un équipement de référence (5).

9. Procédé de communication selon la revendication 2, dans lequel les équipements de référence comprennent un haut-parleur connecté et/ou un boîtier décodeur et/ou une passerelle résidentielle et/ou un équipement de *home cinema* et/ou une chaine hi-fi et/ou une télévision connectée.

10. Equipement portable, comprenant une surface tactile et un composant de traitement dans lequel est mis en œuvre un procédé de communication selon l'une des revendications précédentes.

11. Equipement portable selon la revendication 10, l'équipement portable étant une tablette ou un *smartphone.*

12. Equipement portable selon la revendication 10, dans lequel la surface tactile appartient à un écran tactile ou à un pavé tactile de l'équipement portable.

13. Programme d'ordinateur comprenant des instructions pour mettre en œuvre, par un composant de traitement d'un équipement portable comprenant une surface tactile, le procédé de communication selon l'une des revendications 1 à 9.

14. Moyens de stockage, **caractérisés en ce qu'**ils stockent un programme d'ordinateur comprenant des instructions pour mettre en œuvre, par un composant de traitement d'un équipement portable comprenant une surface tactile, le procédé de communication selon l'une des revendications 1 à 9.

**Patentansprüche**

1. Verfahren zur Kommunikation zwischen einer tragbaren Ausrüstung (1), die eine taktile Oberfläche (2) umfasst, und einer ausgewählten peripheren Ausrüstung (3k), die unter mindestens einer peripheren Ausrüstung (3) ausgewählt wird, umfassend: eine vorbereitende Kalibrierungsphase, die für jede periphere Ausrüstung (3k) die Schritte umfasst:

   - Detektieren der genannten peripheren Ausrüstung (3k);
   - Erfassen einer Position (Pk) der genannten peripheren Ausrüstung;
   - Positionieren der tragbaren Ausrüstung (1) in einer Kalibrierungsposition (Tk);
   - Durchführen eines Kalibrierungsgleitens mit dem Finger oder mit irgendeinem Objekt auf der taktilen Oberfläche (2) der tragbaren Ausrüstung (1), sodass eine Richtung des Kalibrierungsgleitens (Dk) auf die genannte periphere Ausrüstung zielt;
   - Erfassen und Speichern eines Kalibrierungsgleitwinkels ($\theta$k) zwischen der Referenzrichtung (N) und der Richtung des Kalibrierungsgleitens, sowie der Kalibrierungsposition, wobei das Verfahren zur Kommunikation ferner die Schritte umfasst:
   - Bestimmen einer aktuellen Position (T') der tragbaren Ausrüstung und einer aktuellen Ausrichtung der tragbaren Ausrüstung in Bezug auf eine Referenzrichtung (N);
   - Bestimmen einer Richtung eines Auswahlgleitens (D') auf der taktilen Oberfläche der tragbaren Ausrüstung, das durch einen Finger eines Einzelnen oder durch irgendein Objekt erfolgt, wobei die Richtung des Auswahlgleitens relativ zur Referenzrichtung (N) ist;
   - Definieren unter der mindestens einen peripheren Ausrüstung (3) unter Verwendung der Kalibrierungsgleitwinkel, der Kalibrierungspositionen, der aktuellen Position (T') sowie der Richtung des Auswahlgleitens (D') der ausgewählten peripheren Ausrüstung (3k), deren Position (Pk) der Richtung des Auswahlgleitens entspricht;
   - Starten einer Kommunikation zwischen der tragbaren Ausrüstung (1) und der ausgewählten peripheren Ausrüstung (3k).

2. Verfahren zur Kommunikation nach Anspruch 1, bei dem die aktuelle Position (T') der tragbaren Ausrüstung (1) durch Triangulation in einem Bezugssystem bestimmt wird, das durch mindestens drei Referenzausrüstungen (5) definiert ist.

3. Verfahren zur Kommunikation nach Anspruch 2, bei dem die Triangulation eine *Bluetooth-* oder *Wi-Fi-*Triangulation ist.

4. Verfahren zur Kommunikation nach Anspruch 1, umfassend den Schritt des Bestimmens, dass die Position einer peripheren Ausrüstung (3k) der Richtung des Auswahlgleitens entspricht und folglich dass die genannte periphere Ausrüstung die ausgewählte periphere Ausrüstung (3k) ist, wenn $|\theta2-\theta2'| < \varepsilon$, wobei $\varepsilon$ ein vorbestimmter Winkelschwellenwert ist, wobei:

$$\theta2=arccos(((TkPk)^2+(T'Pk)^2-(TkT')^2)/(2*(TkPk)*(T'Pk))),$$

und wobei:

- $\theta2'=\theta k-\theta'$;
- Tk die der peripheren Ausrüstung (3k) zugeordnete Kalibrierungsposition ist;
- Pk die Position der genannten peripheren Ausrüstung (3k) ist;
- TkPk das Segment zwischen Tk und Pk ist;
- T' die aktuelle Position der tragbaren Ausrüstung (1) ist;
- T'Pk das Segment zwischen T' und Pk ist;
- TkT' das Segment zwischen Tk und T' ist;
- $\theta k$ der der peripheren Ausrüstung (3k) zugeordnete Kalibrierungsgleitwinkel ist;
- $\theta'$ der Auswahlgleitwinkel zwischen der Referenzrichtung (N) und der Richtung des Auswahlgleitens (D') ist.

5. Verfahren zur Kommunikation nach Anspruch 1, bei dem die Position mindestens einer peripheren Ausrüstung dadurch bestimmt wird, dass die tragbare Ausrüstung in der unmittelbaren Nähe der peripheren Ausrüstung positioniert wird und dass berücksichtigt wird, dass diese Position der tragbaren Ausrüstung der Position der genannten peripheren Ausrüstung entspricht.

6. Verfahren zur Kommunikation nach Anspruch 1, bei dem die Position mindestens einer peripheren Ausrüstung (3) dadurch bestimmt wird, dass eine Kamera verwendet wird, die ausgebildet ist, um ein Bild der peripheren Ausrüstung zu erfassen.

7. Verfahren zur Kommunikation nach Anspruch 2, bei dem die Position mindestens einer peripheren Ausrüstung (3) durch Triangulation in dem Bezugssystem bestimmt wird.

8. Verfahren zur Kommunikation nach Anspruch 2, bei dem die Referenzausrüstungen (5) mindestens eine periphere Ausrüstung (3) umfassen oder die peripheren Ausrüstungen (3) mindestens eine Referenzausrüstung (5) umfassen.

9. Verfahren zur Kommunikation nach Anspruch 2, bei dem die Referenzausrüstungen einen angeschlossenen Lautsprecher und/oder eine Set-Top-Box und/oder einen Residential Gateway und/oder eine Heimkino-Ausrüstung und/oder eine Hi-Fi-Anlage und/oder einen angeschlossenen Fernseher umfassen.

10. Tragbare Ausrüstung, umfassend eine taktile Oberfläche und eine Verarbeitungskomponente, in der ein Verfahren zur Kommunikation nach einem der vorhergehenden Ansprüche durchgeführt wird.

11. Tragbare Ausrüstung nach Anspruch 10, wobei die tragbare Ausrüstung ein Tablett oder ein *Smartphone* ist.

12. Tragbare Ausrüstung nach Anspruch 10, bei der die taktile Oberfläche zu einem taktilen Bildschirm oder einem taktilen Touchpad der tragbaren Ausrüstung gehört.

13. Computerprogramm, umfassend Anweisungen, um mit Hilfe einer Verarbeitungskomponente einer tragbaren Ausrüstung, die eine taktile Oberfläche umfasst, das Verfahren zur Kommunikation nach einem der Ansprüche 1 bis 9 durchzuführen.

14. Speichermittel, **dadurch gekennzeichnet, dass** sie ein Computerprogramm speichern, das Anweisungen umfasst, um mit Hilfe einer Verarbeitungskomponente einer tragbaren Ausrüstung, die eine taktile Oberfläche umfasst, das Verfahren zur Kommunikation nach einem der Ansprüche 1 bis 9 durchzuführen.

**Claims**

1. Method for communication between a portable device (1) comprising a touch-sensitive surface (2) and a peripheral device (3k) selected from among at least one peripheral device (3), comprising: a preliminary calibration phase comprising the steps, for each peripheral device (3k), of:

   - detecting the said peripheral device (3k);
   - acquiring a position (Pk) of the said peripheral device;
   - requesting to position the portable device (1) in a calibration position (Tk);
   - requesting to carry out a calibration slide with the finger or with the any object, on the touch-sensitive surface (2) of the portable device (1), in such a way that a direction of the calibration slide (Dk) aims at the said peripheral device;
   - acquiring and saving a calibration slide angle ($\theta$k) between the reference direction (N) and the direction of the calibration slide, as well as the calibration position, the method for communication comprising moreover the steps of:
   - determining a current position (T') of the portable device, and a current orientation of the portable device relative to a reference direction (N);
   - determining a direction of a selection slide (D') on the touch-sensitive surface of the portable device, carried out by an individual's finger or by any object, the direction of the selection slide being relative to the reference direction (N) ;
   - defining, from among the at least one peripheral device (3), using the calibration slide angles, the calibration positions, the present position (T'), as well as the direction of the selection slide (D'), the selected peripheral device (3k) whose position (Pk) corresponds to the direction of the selection slide;
   - starting a communication between the portable device (1) and the selected peripheral device (3k).

2. Communication method according to Claim 1, wherein the current position (T') of the portable device (1) is determined by triangulation in a frame of reference defined by at least three reference devices (5).

3. Communication method according to Claim 2, wherein the triangulation is a *Bluetooth* or *Wi-Fi* triangulation.

4. Communication method according to Claim 1, comprising the step of determining that the position of a peripheral device (3k) corresponds to the direction of the selection slide and therefore that the said peripheral device is the selected peripheral device (3k), when |$\theta$2-$\theta$2'|< $\varepsilon$, where $\varepsilon$ is a predetermined angular threshold, where:

   $$\theta2=\text{arccos}(((TkPk)\char`^2+(T'Pk)\char`^2-(TkT')\char`^2)/(2*(TkPk)*(T'Pk))),$$

   and where:

   - $\theta$2'= $\theta$k-$\theta$';
   - Tk is the calibration position associated with the said peripheral device (3k);
   - Pk is the position of the said peripheral device (3k);
   - TkPk is the segment between Tk and Pk;
   - T' is the current position of the portable device (1);
   - T'Pk is the segment between T' and Pk;
   - TkT' is the segment between Tk and T';
   - $\theta$k is the calibration slide angle associated with the said peripheral device (3k);
   - $\theta$' is the selection slide angle between the reference direction (N) and the direction of the selection slide (D').

5. Communication method according to Claim 1, wherein the position of at least one peripheral device is determined by positioning the portable device in the immediate proximity of the said peripheral device, and by considering that this position of the portable device corresponds to the position of the said peripheral device.

6. Communication method according to Claim 1, wherein the position of at least one peripheral device (3) is determined using a camera positioned for acquiring an image of the peripheral device.

7. Communication method according to Claim 2, wherein the position of at least one peripheral device (3) is determined by triangulation in the frame of reference.

8. Communication method according to Claim 2, wherein the reference devices (5) comprise at least one peripheral device (3), or else the peripheral devices (3) comprise at least one reference device (5).

9. Communication method according to Claim 2, wherein the reference devices comprise a connected loud speaker and/or a set-top box and/or a residential gateway and/or a *home cinema* device and/or a hi-fi system and/or a smart television set.

10. Portable device, comprising a touch-sensitive surface and a processing component in which a communication method according to one of the preceding claims is implemented.

11. Portable device according to Claim 10, the portable device being a tablet or a *smartphone.*

12. Portable device according to Claim 10, wherein the touch-sensitive surface is part of a touch-sensitive screen or of a touch pad of the portable device.

13. Computer program comprising instructions for implementing, by a processing component of a portable device comprising a touch-sensitive surface, the communication method according to one of Claims 1 to 9.

14. Storage means, **characterized in that** they store a computer program comprising instructions for implementing, by a processing component of a portable device comprising a touch-sensitive surface, the communication method according to one of Claims 1 to 9.

[Fig.1]

[Fig.2]

**EP 3 657 313 B1**

## RÉFÉRENCES CITÉES DANS LA DESCRIPTION

**Documents brevets cités dans la description**

- US 2013169546 A1

- US 2017090711 A1